# NOUVEAU FASCICULE DE BREVET EUROPEEN

(11) **EP 0 446 126 B2**
(45) Date de publication et mention de la décision concernant l'opposition: **11.06.1997**
(45) Mention de la délivrance du brevet: 15.06.1994
(21) Numéro de dépôt: 91400602.8
(22) Date de dépôt: 05.03.1991
(51) Int. Cl.: B60R 16/00, H01H 9/26

(54) **Manette de commande à deux bagues rotatives, en particulier pour commutateur de véhicules automobiles**
Schalthebelgriff mit zwei Drehringen, insbesondere für Kraftfahrzeugschaltern
Actuating lever handle with two rotating rings, particularly for automobile switches

(30) Priorité: 06.03.1990 FR 9002798
(43) Date de publication de la demande: 11.09.1991
(73) Titulaire: JAEGER, F-92303 Levallois-Perret (FR)
(72) Inventeur: Touroude, Laurent, F-95870 Bezons (FR)
(74) Mandataire: Schrimpf, Robert

(56) Documents cités:
- EP-A- 0 160 905
- DE-A- 2 410 869
- DE-A- 2 631 144
- FR-A- 2 442 739
- US-A- 3 603 748
- US-A- 3 746 804
- US-A- 4 570 078

## Description

La présente invention concerne le domaine des commutateurs électriques, notamment pour véhicules automobiles.

La présente invention concerne plus précisément une manette de commande pour commutateur électrique, comprenant deux bagues rotatives indépendantes.

On a déjà proposé différentes structures de manette à deux bagues. Un commutateur pour véhicules automobiles avec deux bagues de commande est connu par EP-A- 0160 905. Les caractéristiques de ce document sont indiquées dans la première partie de la revendication 1.

La présente invention a pour but de proposer une nouvelle manette de commande de commutateur électrique, à deux bagues, conçue pour assurer sélectivement une liaison à rotation entre les deux bagues.

Un but auxiliaire de la présente invention est de proposer des moyens permettant de lier sélectivement les deux bagues, de sorte que l'une des deux bagues puisse entraîner l'autre bague à rotation, sans que ladite autre bague ne puisse entraîner à rotation la bague première citée.

De tels moyens permettent d'interdire mécaniquement que ladite autre bague n'occupe certains états lorsque la première bague est déplacée dans certaines positions.

Par exemple, la manette à deux bagues conforme à la présente invention permet d'interdire certaines commandes de feux anti-brouillard, contrôlées par ladite autre bague lorsque certaines fonctions d'éclairage contrôlées par la bague première citée sont modifiées.

Les buts précités sont atteints selon la présente invention grâce à une manette de commande, en particulier pour véhicules automobiles, du type comprenant un corps de manette et deux bagues de commande montées à rotation sur le corps de manette pour assurer des fonctions respectives lors de leur rotation, caractérisée par le fait qu'elle comprend au moins un doigt lié à rotation avec l'une des bagues et susceptible de translation sélective par rapport à celle-ci entre une position de repos dans laquelle le doigt n'interfère pas avec le trajet de rotation de la seconde bague et une position active dans laquelle le doigt interfère avec le trajet de rotation de la seconde bague.

Selon une autre caractéristique avantageuse de la présente invention le doigt est sollicité élastiquement vers la position active.

Selon une autre caractéristique avantageuse de la présente invention le déplacement à translation du doigt est contrôlé par une rampe.

Selon une autre caractéristique avantageuse de la présente invention le corps de manette comprend une rampe inclinée par rapport à un plan normal à l'axe de rotation des manettes, le doigt comprend un téton placé en regard de la rampe et un ressort sollicite le doigt vers la rampe de sorte que le téton repose sur celle-ci.

Selon une autre caractéristique avantageuse de la présente invention le doigt comprend une rampe inclinée par rapport à un plan normal à l'axe de rotation des manettes, et le doigt est sollicité vers une structure solidaire du corps.

Selon une autre caractéristique avantageuse de la présente invention il est prévu différents doigts équirépartis autour de l'axe de rotation des manettes.

D'autres caractéristiques, buts et avantages de la présente invention apparaîtront à la lecture de la description détaillée qui va suivre, et en regard des dessins annexés, donnés à titre d'exemples non limitatifs et sur lesquels :
- la figure 1 représente une vue schématique en coupe axiale longitudinale d'une manette de commande conforme à la présente invention,
- les figures 2A, 2B, 2C, 3A, 3B, 3C, 4A, 4B, 4C représentent schématiquement la coopération entre les deux bagues,
- la figure 5 représente sous forme d'organigramme les possibilités de coopération entre les deux bagues, et
- la figure 6 représente une vue éclatée de la bague de commande conforme à la présente invention représentée sur la figure 1.

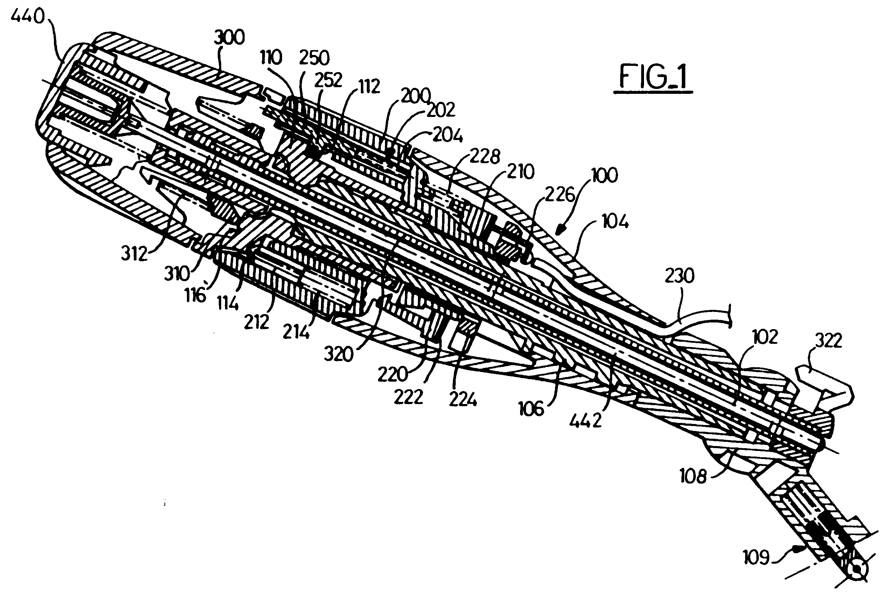

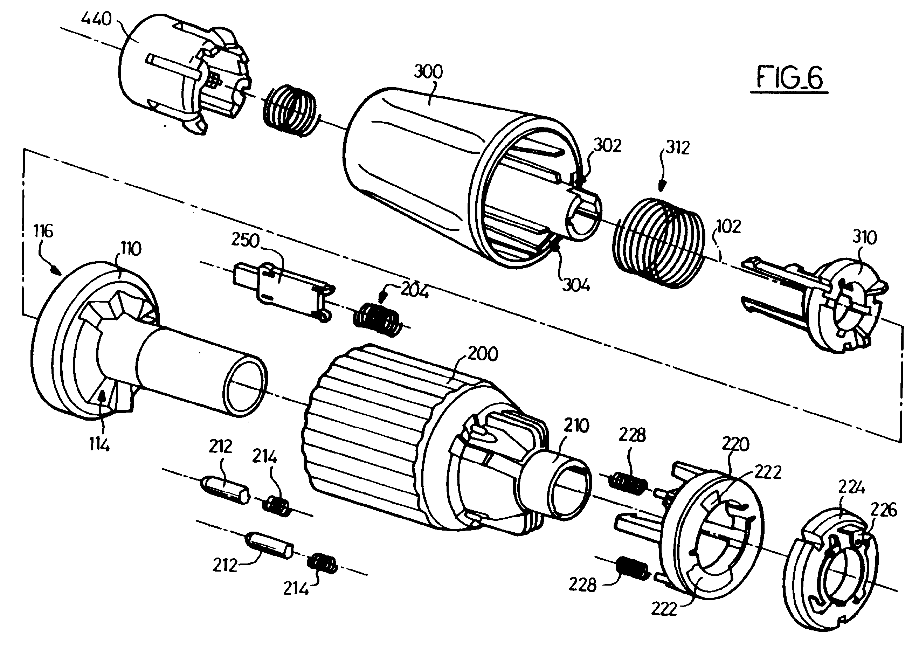

On aperçoit sur les figures 1 et 6 annexées une manette de commande de commutateur électrique comprenant un corps 100 sensiblement symétrique de révolution autour d'un axe 102 et qui porte deux bagues 200, 300, susceptibles de rotation autour de l'axe 102.

Le corps 100 ainsi que les organes de commutation électrique commandés par le déplacement des bagues 200, 300 peuvent faire l'objet d'un grand nombre de variantes. La structure du corps 100 et de ses organes de commutation électrique représentés sur les figures 1 et 6 annexées sera décrite plus en détail par la suite.

Comme indiqué précédemment, la bague 200 est équipée d'un doigt 250.

Le doigt 250 s'étend parallèlement à l'axe 102. Il est pourvu d'un téton ou décrochement 252 qui lui est transversal, c'est-à-dire qui s'étend perpendiculairement à l'axe 102.

Le doigt 250 est lié à rotation avec la bague 200 tout en étant susceptible de translation sélective par rapport à celle-ci.

Pour cela le doigt 250 est placé dans une chambre complémentaire 202 ménagée dans la bague 200. Cette chambre 202 s'étend parallèlement à l'axe 102 et débouche sur la face de la bague 200 dirigée vers la seconde bague 300.

Un ressort 204 intercalé entre le fond de la chambre 202 et le doigt 250 sollicite ce dernier vers la seconde bague 300.

Cependant, le corps 100 est muni d'une platine 110 qui limite le déplacement du doigt 250 vers la bague 300.

Pour cela la platine 110 est pourvue d'une rampe 112 qui s'étend généralement transversalement à l'axe 102. Plus précisément la rampe 112 est inclinée par rapport à un plan normal à l'axe 102. La rampe 112 est placée en regard du téton ou décrochement 252.

Ainsi, grâce à la sollicitation du ressort 204, le téton ou décrochement 252 repose sur la rampe 112.

De ce fait, le doigt 250 en fonction de la position relative à rotation entre la bague 200 et la platine 110 est déplacé entre une position de repos et une position active. La position de repos est obtenue lorsque le téton ou décrochement 252 repose contre la portion de rampe 112 la plus interne à la bague 200. La position active est obtenue lorsque le téton ou décrochement 252 repose contre la portion de rampe 112 la plus externe à la bague 200.

En position de repos le doigt 250 n'interfère pas avec le trajet de rotation de la seconde bague 300. En revanche en position active le doigt 250 interfère avec le trajet de rotation de la seconde bague 200.

Pour cela la bague 300 est pourvue d'au moins une nervure 302 susceptible de prendre appui latéralement sur le doigt 250 lorsque celui-ci est placé en position active, pour entraîner la première bague 200 à rotation lorsque la seconde bague 300 est elle-même sollicitée à rotation.

Plus précisément encore, de préférence, la nervure 302 est formée d'une nervure périphérique s'étendant perpendiculairement à l'axe 102 et conçue pour interdire sélectivement le déplacement du doigt 250 en position active.

Ainsi, lorsque le doigt 250 est placé en regard de la nervure 302, il repose sur la face avant 304 de celui-ci dirigé vers la bague 200 de sorte que le doigt 250 ne peut atteindre la position active.

L'étendue périphérique et la localisation de la nervure 302 sont définies en fonction de chaque configuration de manette requise.

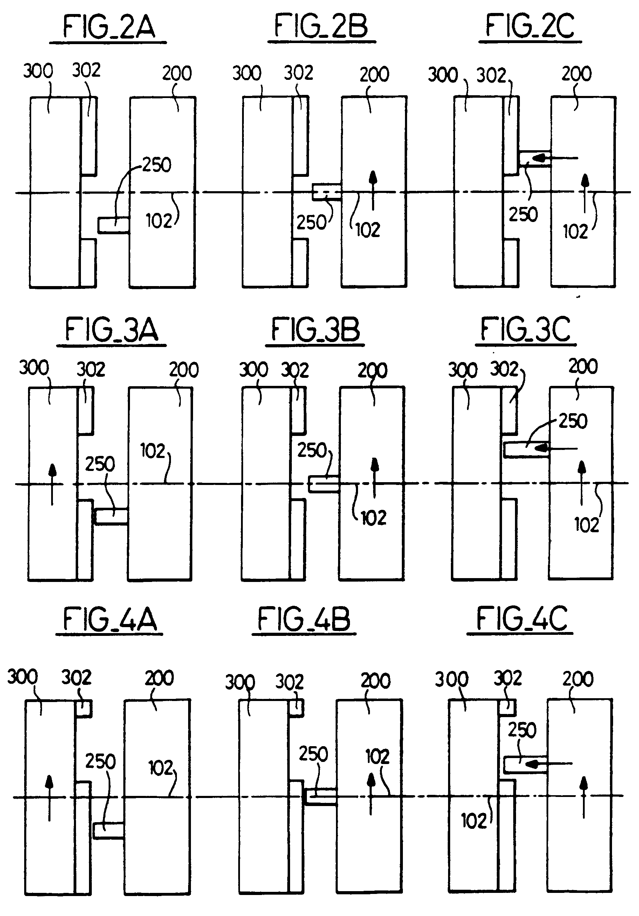

On va maintenant préciser la coopération possible entre les bagues 200 et 300, grâce au doigt 250, en regard des figures 2A, 2B, 2C, 3A, 3B, 3C, 4A, 4B, 4C et 5.

Sur les figures 2A à 4C on a représenté schématiquement la première bague 200 équipée du doigt 250 et la deuxième bague 300 équipée de la nervure 302 formant butée sélective pour le doigt 250.

Les bagues 200 et 300 sont susceptibles de rotation autour de l'axe 102. Plus précisément, la bague 200 est susceptible d'occuper trois positions. Une première position de la bague 200 est représentée sur les figures 2A, 3A, 4A. Une deuxième position de la bague 200 est représentée sur les figures 2B, 3B, 4B. Une troisième position de la bague 200 est représentée sur les figures 2C, 3C et 4C.

A titre d'exemple non limitatif, la bague 200 peut être utilisée pour commander dans sa deuxième position la mise en service de feux anti-brouillard avant et pour commander dans sa troisième position la mise en service de feux anti-brouillard arrière.

De même la deuxième bague de commande 300 est susceptible d'occuper trois positions autour de l'axe 102. Une première position de la seconde bague 300 est représentée sur les figures 2A, 2B, 2C.

Une deuxième position de la seconde bague 300 est représentée sur les figures 3A, 3B, 3C. Une troisième position de la seconde bague 300 est représentée sur les figures 4A, 4B, 4C.

A titre d'exemple non limitatif la seconde bague 300 peut commander la mise en service de feux ville dans sa seconde position et peut commander la mise en service de feux route dans sa troisième position.

Selon le mode de réalisation particulier, mais non limitatif représenté sur les figures 2A à 4C, la rampe 112 prévue sur la platine 110 est conçue pour n'autoriser le passage du doigt 250 de la position de repos vers la position active que lorsque la bague 200 est déplacée dans sa troisième position.

Par ailleurs, la nervure formant butée 302 prévue sur la seconde bague 300 est conçue pour interdire le déplacement du doigt 250 en position active lorsque la première bague de commande 200 est dans sa troisième position et que simultanément la deuxième bague de commande 300 est en première position.

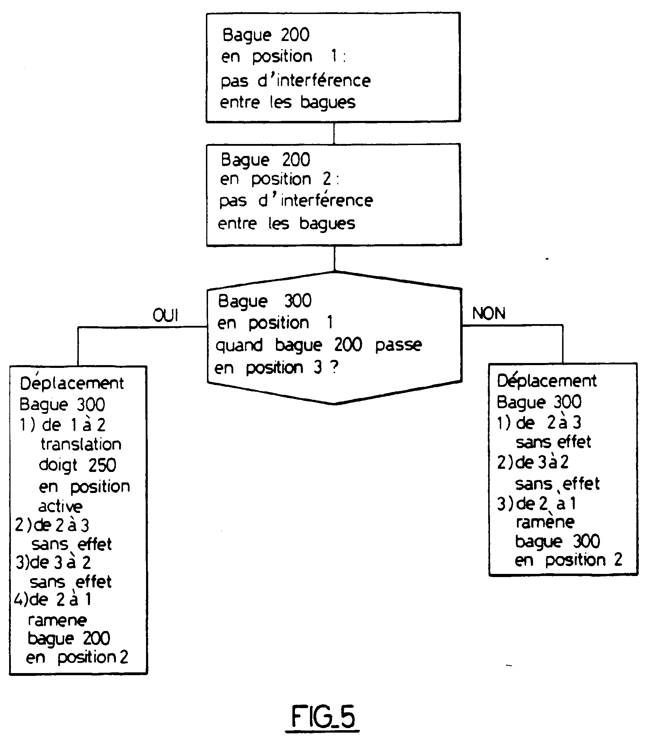

Comme représenté sur la figure 5 le fonctionnement de la manette de commande définie ci-dessus est le suivant.

Tant que la première bague 200 est en position 1, comme représenté sur les figures 2A, 2B et 2C la rampe 112 interdit le déplacement du doigt 250 en position active. Le doigt 250 reste donc en position de repos. Il ne peut interférer avec la nervure 302 prévue sur la seconde bague 300.

Il n'y a donc pas interférence entre les deux bagues 200, 300. La seconde bague 300 peut être déplacée indépendamment de la seconde bague 200 entre ses positions 1, 2 et 3. Les bagues 200, 300 prennent alors les positions relatives représentées respectivement sur les figures 2A, 3A et 4A.

De même tant que la bague 200 est en position 2, comme représenté sur les figures 2B, 3B et 4B, la rampe 112 interdit le déplacement du doigt 250 en position active. Le doigt reste donc en position de repos. Il ne peut interférer avec la nervure 302 prévue sur la seconde bague de commande 30 . Il n'y a donc pas interférence entre les deux bagues 200 et 300. La seconde bague 300 peut être déplacée indépendamment de la première bague 200 entre ses positions 1, 2 et 3. Les bagues 200 et 300 occupent alors les positions relatives représentées schématiquement sur les figures 2B, 3B et 4B.

Si la bague 300 occupe la position 1 comme représentée sur la figure 2C quand la bague 200 est déplacée en position 3, la rampe 112 autorise le déplacement du doigt 250 en position active. Cependant la nervure 302 étant placée en regard du doigt 250 ce dernier ne peut atteindre la position active et vient reposer sur la face avant 304 de la nervure 302.

Dans ce cas, le doigt 250 ne peut atteindre la position active que si la bague 300 est déplacée de sa position 1 à la position 2 comme représenté sur la figure 3C. Un déplacement ultérieur de la bague de commande 300 entre la position 2 représentée sur la figure 3C et la position 3 représentée sur la figure 4C est sans effet. C'est-à-dire que dans cette dernière position le doigt 250 reste en position active, mais la nervure 302 ne venant pas solliciter le doigt 250 aucune liaison n'est définie entre les bagues 200 et 300.

Il en est de même lorsque la seconde bague de commande 300 est déplacée de la position 3 représentée sur la figure 4C à la position 3 représentée sur la figure 3C. Dans ce cas en effet le doigt de commande 250 reste en position active mais la nervure 302 ne sollicitant toujours pas le doigt 250 aucune liaison n'est définie entre les bagues 200 et 300.

En revanche, lorsque la seconde bague 300 est déplacée de sa position 2 à sa position 1, la nervure 302 vient prendre appui latéralement sur le doigt 250 lié à rotation avec la bague 200 pour ramener cette dernière dans sa position 2. Les bagues 200, 300 passent alors de la configuration représentée sur la figure 3C à la position représentée sur la figure 2B.

Si maintenant la bague 300 n'est pas en position 1 quand la bague 200 passe en position 3, cela signifie que la bague 300 est soit en position 2 soit en position 3. Dans ce cas le doigt de commande 250 passe directement en position active, la nervure 302 n'étant plus placée en regard du doigt 250. Les bagues 200 et 300 occupent l'une des configurations représentées sur la figure 3C ou 4C selon que la bague de commande 300 est en position 2 ou 3.

Là encore le déplacement de la seconde bague 300 de la position 2 à la position 3 (figure 3C vers figure 4C) ou de la position 3 à la position 2 (passage de la figure 4C à la figure 3C) est sans effet c'est-à-dire que le doigt 250 reste en position active mais que la nervure 302 ne venant pas solliciter latéralement le doigt 250 aucune liaison n'est définie entre les bagues 200 et 300.

Si par contre, la bague 300 est déplacée de la position 2 à la position 1, la nervure 302 prend appui latéralement sur le doigt 250 et sollicite la première bague 200 vers sa position 2.

Là encore les bagues de commande 200, 300 passent alors de la position représentée sur la figure 3C à la position représentée sur la figure 2B.

Il résulte de la description qui précède que si la seconde bague 300 peut agir sur la première bague 200, en revanche la première bague de commande 200 ne peut en aucune façon entraîner la deuxième bague de commande 300 à rotation.

Bien entendu la manette de commande conforme à la présente invention n'est pas limitée aux modes de réalisation particuliers precédemment décrits.

Par exemple on peut placer la rampe 112 non pas sur une platine solidaire du corps de manette 100, mais sur le doigt 250. Dans ce cas la rampe prévue sur le doigt 250 vient reposer, grâce à la sollicitation du ressort 204 sur une structure formant butée solidaire de la platine 110.

De même, on peut envisager de placer le doigt sur la bague 300 et non point sur la bague 200.

On peut également envisager d'utiliser différents doigts 250 équirépartis autour de l'axe 102 de la manette, par exemple de deux doigts diamétralement opposés.

Comme indiqué précédemment, la structure du corps 100 de la manette et des organes fonctionnels de commutation électrique intrégrés à celui-ci peuvent faire l'objet de nombreuses variantes de réalisation.

La représentation de ces éléments donnés sur les figures 1 et 6 annexées correspond aux dispositions décrites et revendiquées dans la demande de brevet français déposée le 23 Mars 1989 sous le n° 89 03821 à laquelle on se reportera utilement pour la bonne compréhension de la présente invention.

Compte-tenu du renvoi qui est fait ici à cette demande de brevet antérieur n° 89 03821, la structure des organes fonctionnels de commutation électrique représentés sur les figures 1 et 6 annexées ne sera pas décrite en détail par la suite.

Toutefois, on notera que selon ce mode de réalisation particulier le corps 100 loge un équipage électrique lié à rotation avec la première bague de commande 200, des liaisons électriques associées à l'équipage électrique étant engagées entre le corps et un support allongé solidaire de celui-ci pour être accessible à l'extrémité arrière du corps, tandis qu'un arbre guidé à rotation à l'intérieur du support allongé est lié à rotation avec la deuxième bague de commande 300 et accessible à l'extrémité arrière du corps de manette pour opérer un effet de commutation par actionnement mécanique.

Plus précisément, selon le mode de réalisation donné sur les figures annexées, le carter 100 de commutateur est formé d'une jupe 104 évasée vers l'avant et d'un tube support allongé 106. Le tube support allongé 106 est fixé sur l'arrière de la jupe 104. Le tube 106 émerge sur l'arrière de cette jupe 104. A ce niveau le tube support 106 porte une pièce 108 formant rotule permettant de guider la manette 100 à rotation au moins autour d'un axe perpendiculaire au plan de la figure 1 sur le corps de commutateur recevant la manette (ce corps de commutateur peut faire l'objet de nombreux modes de réalisation connus de l'homme de l'art et n'a pas été représenté pour simplifier l'illustration). Ce déplacement de la manette autourd'un axe perpendiculaire au plan de la figure 1 défini par la rotule 108 est indexé par des moyens connus en eux-mêmes référencés 109 sur la figure 1 et prévus au niveau de la structure formant rotule 108. La platine 110 portant la rampe 112 est fixée sur l'extrémité avant du tube support 106.

La première bague 200 est munie d'un moyeu 210 par lequel la bague 200 est guidée à rotation sur le tube support 106. La première bague 200 est indexée dans sa rotation autour de l'axe 102 par des moyens d'indexation formés de doigts 212 sollicités élastiquement par des ressorts 214 contre une surface crantée 114 prévue sur la platine 110.

Une couronne 220 en matériau électriquement isolant est liée à rotation avec la bague 200 tout en étant libre de translation par rapport à celle-ci. La bague 220 est pourvue d'au moins une piste électriquement conductrice 222. La jupe 104 et le tube support 106 du carter de manette portent une platine 224 en matériau électriquement isolant pourvue de contacts électriques 226 aptes à coopérer avec les pistes 222 précitées. La couronne 220 est sollicitée élastiquement par des ressorts 228 vers les contacts 226.

Les contacts 226 sont liés à des liaisons électriques 230 accessibles à l'extérieur du carter de manette.

Ainsi, la rotation de la bague 200 autour de l'axe 102 modifie l'état de coopération entre les pistes 222 et les contacts 226 pour opérer un effet de commutation électrique.

La seconde bague 300 est indexée dans sa rotation autour de l'axe 102 par une bague 310. Cette bague 310 est dentée, liée à rotation avec la bague de commande 300 et sollicitée en appui contre une surface crantée 116 prévue sur la platine 110 grâce à un ressort 312.

La seconde bague 300 est solidaire d'un arbre 320 guidé à rotation à l'intérieur du tube support 106. De préférence l'arbre 120 est un arbre creux. L'arbre 320 émerge à l'extrémité arrière du tube support 106 et de l'embout formant rotule 108 associé. Au niveau de son extrémité émergeant sur l'arrière de l'embout 108 l'arbre creux 320 est muni d'un doigt excentré 322. De façon connue en soi le doigt 322 peut entraîner à rotation un tiroir intégré au corps de commutateur, pour assurer un second effet de commutation lorsque la bague 300 est entraînée à rotation autour de l'axe 102.

Enfin, on notera que selon le mode de réalisation représenté sur la figure 1, la seconde bague 300 est pourvue sur son extrémité avant d'un bouton 340 solidaire d'une tige 442 guidée à translation à l'intérieur de l'arbre creux 320 pour assurer un autre effet de commutation lorsque le bouton 440 est déplacé en translation selon l'axe 102.

Comme indiqué précédemment la structure interne de la manette n'est pas limitée à la disposition qui précède.

Ainsi par exemple, comme décrit dans la demande de brevet français déposée le 8 Septembre 1988 sous le n° 88 11745, à laquelle on se rapportera utilement, on peut prévoir d'équiper chaque bague de commande d'une plaquette de circuit généralement perpendiculaire à l'axe de rotation 102, au moins un conducteur électrique généralement parallèle à l'axe de rotation des bagues étant immobilisé à rotation par rapport au corps 100 et reposant par contact frottant sur chacune des deux plaquettes de circuit par ses extrémités respectives.

## Revendications

1. Manette de commutateur, en particulier pour véhicules automobiles, du type comprenant un corps de manette (100) et deux bagues de commande (200, 300) montées à rotation sur le corps (100) pour assurer des fonctions respectives lors de leur rotation caractérisée par le fait qu'elle comprend au moins un doigt (250) lié à rotation avec l'une des bagues (200) et susceptible de translation sélective par rapport à celle-ci, parallèlement à l'axe de rotation (102) des bagues (200, 300) entre une position de repos dans laquelle le doigt n'interfère pas avec le trajet de rotation de la seconde bague (300) et une position active dans laquelle le doigt (250) interfère avec le trajet de rotation de la seconde bague (300) et des moyens (112, 204, 252) conçus pour déplacer le doigt (250) à translation, de la position de repos vers la position active, sélectivement, sous l'effet de la rotation de la première bague (200).

2. Manette selon la revendication 1, caractérisée par le fait que le doigt (250) est sollicité élastiquement (204) vers. la position active.

3. Manette selon l'une des revendications 1 ou 2, caractérisée par le fait que le déplacement à translation du doigt (250) est contrôlé par une rampe (112).

4. Manette selon l'une des revendications 1 à 3, caractérisée par le fait que le corps de manette (100) est pourvu d'une rampe (112) inclinée par rapport à un plan normal à l'axe (102) de rotation des bagues (200, 300), le doigt (250) étant pourvu d'un téton (252) placé en regard de la rampe (112) et un ressort (204) sollicitant le doigt (250) vers la rampe (112) de sorte que le téton (252) repose sur celle-ci.

5. Manette selon l'une des revendications 1 à 3, caractérisée par le fait que le doigt (250) est muni d'une rampe (112) inclinée par rapport à un plan transversal à l'axe de rotation des bagues (200, 300), le doigt (250) étant sollicité vers une structure solidaire du corps (100).

6. Manette selon l'une des revendications 1 à 5, caractérisée par le fait qu'elle comprend plusieurs doigts (250) équirépartis autour de l'axe (102) de rotation des bagues (200, 300).

7. Manette selon la revendication 6, caractérisée par le fait qu'elle comprend deux doigts (250) diamétralement opposés par rapport à l'axe (102) de rotation des bagues (200, 300).

8. Manette selon l'une des revendications 1 à 7, caractérisée par le fait que la seconde bague (300) est munie d'une nervure (302) susceptible d'interdire sélectivement le déplacement du doigt (250) en position active selon la position de la seconde bague (300).

9. Manette selon l'une des revendications 1 à 8, caractérisée par le fait que la première bague (200) est susceptible d'occuper trois positions indexées autour de l'axe (102).

10. Manette selon l'une des revendications 1 à 9, caractérisée par le fait que la seconde bague de commande (300) est susceptible d'occuper trois positions indexées autour de l'axe (102).

11. Manette selon l'une des revendications 1 à 10, caractérisée par le fait que la première bague de commande (200) est conçue pour commander la mise en service de feux anti-brouillard avant et de feux anti-brouillard arrière.

12. Manette selon l'une des revendications 1 à 11, caractérisée par le fait que la deuxième bague de commande (300) est conque pour assurer la mise en service de feux ville et de feux route.

13. Manette selon l'une des revendications 1 à 12, caractérisée par le fait qu'elle comprend :
- un corps (100, 104),
- un support allongé (106) creux fixé à rotation à l'intérieur du corps (104) et centré sur l'axe de celui-ci,
- une première bague (200) de commande guidée à rotation sur le support allongé (106),
- un équipage électrique (220, 222) lié à rotation avec la première bague de commande (200),
- des liaisons électriques (230) associées à l'équipage électrique (220,222), engagées entre le corps (104) et le support allongé (106) pour être accessibles à l'extrémité arrière du corps,
- un arbre (320) guidé à rotation à l'intérieur du support allongé (106) et accessible également à l'extrémité arrière de celui-ci pour opérer un effet de commutation par actionnement mécanique, et
- une deuxième bague de commande (300) solidaire de l'extrémité avant de l'arbre (320).

14. Manette selon l'une des revendications 1 à 12, caractérisée par le fait que chaque bague de commande (200, 300) est munie d'une plaquette de circuit généralement perpendiculaire à son axe de rotation et qu'il est prévu au moins un conducteur électrique généralement parallèle à l'axe de rotation des bagues et immobilisé à rotation par rapport au corps, qui repose par contact frottant sur chacune des deux plaquettes de circuit par ses extrémités respectives.

## Claims

1. Switch knob, particularly for motor vehicles, of the type comprising a knob body (100) and two operating rings (200, 300) mounted so that they can rotate on the body (100) in order to fulfil respective functions as they rotate, characterized in that it comprises at least one finger (250) which is rotationally connected to one of the rings (200) and capable of selective translation with respect to it, parallel to the axis of rotation (102) of the rings (200, 300) between a position of rest in which the finger does not interfere with the rotational path of the second ring (300) and an active position in which the finger (250) does interfere with the rotational path of the second ring (300) and means (112, 204, 252) designed to move the finger (250) in translation from the position of rest towards the active position, selectively, under the effect of rotation of the first ring (200).

2. Knob according to Claim 1, characterized in that the finger (250) is elastically urged (204) towards the active position.

3. Knob according to one of Claims 1 or 2, characterized in that the translational movement of the finger (250) is controlled by a ramp (112).

4. Knob according to one of Claims 1 to 3, characterized in that the knob body (100) is provided with a ramp (112) which is inclined with respect to a plane normal to the axis (102) of rotation of the rings (200, 300), the finger (250) being provided with a stub (252) placed facing the ramp (112) and a spring (204) urging the finger (250) towards the ramp (112) so that the stub (252) rests on this ramp.

5. Knob according to one of Claims 1 to 3, characterized in that the finger (250) is equipped with a ramp (112) which is inclined with respect to a plane transverse to the axis of rotation of the rings (200, 300), the finger (250) being urged towards a structure secured to the body (100).

6. Knob according to one of Claims 1 to 5, characterized in that it comprises several fingers (250) equally distributed about the axis (102) of rotation of the rings (200, 300).

7. Knob according to Claim 6, characterized in that it comprises two fingers (250) which are diametrically opposite with respect to the axis (102) of rotation of the rings (200, 300).

8. Knob according to one of Claims 1 to 7, characterized in that the second ring (300) is equipped with a rib (302) capable selectively of preventing the movement of the finger (250) into the active position, depending on the position of the second ring (300).

9. Knob according to one of Claims 1 to 8, characterized in that the first ring (200) is capable of occupying three indexed positions about the axis (102).

10. Knob according to one of Claims 1 to 9, characterized in that the second operating ring (300) is capable of occupying three indexed positions about the axis (102).

11. Knob according to one of Claims 1 to 10, characterized in that the first operating ring (200) is designed to switch on front fog lights and rear fog lights.

12. Knob according to one of Claims 1 to 11, characterized in that the second operating ring (300) is designed to switch on sidelights and headlights.

13. Knob according to one of Claims 1 to 12, characterized in that it comprises:
- a body (100, 104),
- a hollow elongate support (106) rotationally fixed inside the body (104) and centred on the axis of the latter,
- a first operating ring (200) which is guided in terms of rotation on the elongate support (106),
- electrical equipment (220, 222) rotationally connected to the first operating ring (200),
- electrical connections (230) associated with the electrical equipment (220, 222), and engaged between the body (104) and the elongate support (106) so that they can be accessed from the rear end of the body,
- a shaft (320) guided in terms of rotation inside the elongate support (106) and also accessible from the rear end of the latter in order, effectively, to carry out switching over by mechanical actuation, and
- a second operating ring (300) secured to the front end of the shaft (320).

14. Knob according to one of Claims 1 to 12, characterized in that each operating ring (200, 300) is equipped with a circuit board which is generally perpendicular to its axis of rotation, and in that at least one electrical conductor is provided, generally parallel to the axis of rotation of the rings and immobilized in terms of rotation with respect to the body, which rests, by means of rubbing contact, on each of the two circuit boards via its respective ends.

## Patentansprüche

1. Schaltergriff insbesondere für Kraftfahrzeuge mit einem Griffkörper (100) und zwei Betätigungsringen (200, 300), die drehbar am Körper angebracht sind, um während ihrer Drehung für jeweilige Funktionen zu sorgen, dadurch gekennzeichnet, daß er wenigstens einen Finger (250), der drehbeweglich mit einem der Ringe (200) verbunden ist und demgegenüber wahlweise eine Translationsbewegung parallel zur Drehachse (102) der Ringe (200, 300) zwischen einer Ruhelage, in der der Finger nicht in den Weg der Drehung des zweiten Ringes (300) eingreift, und einer aktiven Position ausführen kann, in der der Finger (250) in den Weg der Drehung des zweiten Ringes (300) eingreift, und Einrichtungen (112, 204, 252) aufweist, die so ausgebildet sind, daß sie selektiv unter dem Einfluß der Drehung des ersten Ringes (200) den Finger (250) zum Ausführen einer Translationsbewegung von der Ruhelage zur aktiven Position versetzen.

2. Griff nach Anspruch 1, dadurch gekennzeichnet, daß der Finger (250) in die aktive Position elastisch vorgespannt (204) ist.

3. Griff nach einem der Ansprüche 1 oder 2, dadurch gekennzeichnet, daß die Translationsbewegung des Fingers (250) über eine schiefe Ebene (112) geführt ist.

4. Griff nach einem der Ansprüche 1 bis 3, dadurch gekennzeichnet, daß der Griffkörper (100) mit einer schiefen Ebene (112) versehen ist, die bezüglich einer zur Drehachse (102) der Ringe (200, 300) normalen Ebene geneigt ist, wobei der Finger (250) mit einem Ansatz (252) versehen ist, der der schiefen Ebene (112) gegenüber angeordnet ist, und eine Feder (204) den Finger (250) gegen die schiefe Ebene (112) vorspannt derart, daß der Ansatz (252) daran anliegt.

5. Griff nach einem der Ansprüche 1 bis 3, dadurch gekennzeichnet, daß der Finger (250) mit einer schiefen Ebene (112) versehen ist, die bezüglich einer quer zur Drehachse der Ringe (200, 300) verlaufenden Ebene schräg verläuft, wobei der Finger (250) gegen eine fest am Körper (100) angebrachte Konstruktion vorgespannt ist.

6. Griff nach einem der Ansprüche 1 bis 5, dadurch gekennzeichnet, daß er mehrere Finger (250) aufweist, die um die Drehachse (102) der Ringe (200, 300) gleichverteilt sind.

7. Griff nach Anspruch 6, dadurch gekennzeichnet, daß er zwei Finger (250) umfaßt, die bezüglich der Drehachse (102) der Ringe (200, 300) diametral einander gegenüber angeordnet sind.

8. Griff nach einem der Ansprüche 1 bis 7, dadurch gekennzeichnet, daß der zweite Ring (300) mit einer Rippe (302) versehen ist, die wahlweise die Versetzung des Fingers (250) in die aktive Position je nach der Position des zweiten Ringes (300) verhindern kann.

9. Griff nach einem der Ansprüche 1 bis 8, dadurch gekennzeichnet, daß der erste Ring (200) drei Schaltpositionen um die Achse (102) herum einnehmen kann.

10. Griff nach einem der Ansprüche 1 bis 9, dadurch gekennzeichnet, daß der zweite Ring (300) drei Schaltpositionen um die Achse (102) herum einnehmen kann.

11. Griff nach einem der Ansprüche 1 bis 10, dadurch gekennzeichnet, daß der erste Betätigungsring (200) dazu bestimmt ist, vordere Nebelleuchten und hintere Nebelleuchten einzuschalten.

12. Griff nach einem der Ansprüche 1 bis 11, dadurch gekennzeichnet, daß der zweite Betätigungsring (300) dazu bestimmt ist, die Leuchten für das Standlicht und die Leuchten für das Abblendlicht einzuschalten.

13. Griff nach einem der Ansprüche 1 bis 12, dadurch gekennzeichnet, daß er
- einen Körper (100, 104),
- einen langgestreckten hohlen Halter (106), der drehbar im Inneren des Körpers (104) befestigt und um dessen Achse zentriert ist,
- einen ersten Betätigungsring (200), der am langgestreckten Halter (106) drehbar geführt ist,
- eine elektrische Anordnung (220, 222), die drehbeweglich mit dem ersten Betätigungsring (200) verbunden ist,
- elektrische Verbindungen (230), die der elektrischen Anordnung (220, 222) zugeordnet sind und zwischen dem Körper (104) und dem langgestreckten Halter (106) so aufgenommen sind, daß sie vom hinteren Ende des Körpers aus zugänglich sind,
- eine Achse (320), die drehbeweglich im Inneren des langgestreckten Halters (106) geführt ist und gleichfalls vom hinteren Ende desselben zugänglich ist, um über eine mechanische Betätigung einen Schalteffekt zu bewirken, und
- einen zweiten Betätigungsring (300) aufweist, der fest am vorderen Ende der Achse (320) angebracht ist.

14. Griff nach einem der Ansprüche 1 bis 12, dadurch gekennzeichnet, daß jeder Betätigungsring (200, 300) mit einer Schaltungsplatte im wesentlichen senkrecht zu seiner Drehachse versehen ist und daß wenigstens ein elektrischer Leiter im wesentlichen parallel zur Drehachse der Ringe und bezüglich des Körpers drehunbeweglich vorgesehen ist, der über einen Reibkontakt an jeder der beiden Schaltungsplatten an seinen jeweiligen Enden anliegt.
